# EUROPEAN PATENT APPLICATION

(11) **EP 1 657 928 A1**
(43) Date of publication of application: **17.05.2006**
(21) Application number: 04026829.4
(22) Date of filing: 11.11.2004
(51) Int. Cl.: H04N 7/24, H04N 7/173, H04L 12/64

(54) **Mobile television receiver**

(71) Applicant: Harman Becker Automotive Systems GmbH, 76307 Karlsbad (DE)
(72) Inventor: Teichner, Detlef, 78126 Königsfeld (DE); Link, Hermann, 78166 Donaueschingen (DE)
(74) Representative: Grünecker, Kinkeldey, Stockmair & Schwanhäusser Anwaltssozietät

(57) **Abstract**

The present invention relates to the reproduction of a television signal on a distant reproduction device. The received television signal is encoded and transmitted in a digital data format over a communication link to the reproduction device. The reproduction device decodes the received video information for display on a display screen. The present invention is particularly intended for use in mobile vehicles, coaches and trains, where the signal strength of a received television signal during travel is continuously varying and signal distortions occur frequently. In order to reduce the effect of signal distortions on the perceived image and audio quality, the present invention inserts a compressed pre-stored video or audio data into the data stream transmitted from the television receiver to the reproduction device upon detection of a television signal distortion. Thus, the decoding procedure at the display device can be maintained in spite of a received a television signal of insufficient signal strength.

## Description

The present invention relates to a method for reproducing a television signal on a reproduction device and in particular to a mobile television receiver providing a television signal for reproduction to a reproduction device.

Nowadays automotive vehicles are increasingly equipped with on-board television receivers. Each television program is broadcast terrestrially by a chain of radio stations. The radio stations are distributed such that preferably at each location within an area covered by a broadcast program the program can be received by at least one of the radio stations. Television receivers used in vehicles select a particular channel for receiving radio waves of a close-by radio station wherein the channel selection depends on the driver's program selection and the vehicle position in relation to the closest radio stations. Presently used radio chains are operated such that each radio station transmits the television signal on an individual channel, i.e. an individual radio frequency. During travel, the currently received television signal of a mobile television receiver tends to undergo fading and the television receiver needs to continuously select a radio station providing a better signal quality, i.e. having a higher signal strength.

The terrestrially broadcast television signals are presently mainly transmitted in an analogue manner based on long established television standards. Such analogue television standards are PAL, SECAM and NTSC. The PAL (Phase Alternate Lines) standard is in particular in use in western Europe and Asia. The SECAM (Séquentiel Couleur Avec Mémoire) standard has been developed based on PAL and is in use, for instance, in France, Eastern Europe and Northern Africa. PAL and SECAM use the same resolution of 625 lines at a frame rate of 25 frames per second. The NTSC (National Television Standards Committee) standard is used in Northern America and Japan. NTSC has a lower line resolution compared to PAL and SECAM (525 lines) and displays the frames at a frame rate of 30 frames per second.

The television signal received by a television receiver is first decoded to a composite video signal (CVBS). Conventionally the composite video signal is converted to YUV or RGB signal and directly applied to a display device.

Television signals may also be broadcast in form of digital data by emerging digital televisions standards like DVB or DAB.

Mobile television receivers are particularly in use in vehicles, coaches and trains. In all these vehicles one or more display devices are mount at separate, distant locations from the television receiver. The transmission of video data from the television receiver which are intended for display on a display device is accomplished by employing a particular communication link connecting the television receiver and the display device.

Today's vehicles are increasingly equipped with a communication network for transmitting entertainment and information data within the vehicle. Such a communication network can also be used to transmit the video signal from a television receiver for display towards a display device. These existing communication networks are either provided in accordance with the IEEE 1394 standard or in accordance with the MOST standard. MOST communication networks are in particular intended for use in vehicles.

For transmission of the video data on such a communication network to one or more display devices, the video information to be transmitted has to be adapted to the transmission scheme employed on the communication network. For this purpose the video information is preferably transmitted in accordance with one of the standardized digital video encoding techniques. Such digital coding standards are for instance the MPEG-x standards (MPEG-1, MPEG-2, MPEG-4 and MPEG-7) and the H.26x standards (H.261, H.262, H.263 and H.264).

In particular, MPEG-2 standards define the format of various component parts of a multi media program. Such programs may consist of MPEG-2 encoded video, audio, control data etc. MPEG-2 further defines the multiplexing of the components into a single synchronous transmission bit stream. The most basic component of an MPEG bit stream is the "elementary stream". Each elementary stream output by MPEG audio, video or data encoders contains a single type of signals. Each elementary stream is accumulated into a stream of "Packetised Elementary Stream" (PES) packets. A PES packet may be a fixed or variable sized block. The PES includes synchronization information such as the "elementary stream clock reference" (ESCR).

For generating an MPEG transport stream (TS) each PES packet is broken into fixed-size transport packets forming a general purpose way of combining one or more streams. The transport stream consists of a sequence of packets of 188 bytes. Each packet comprises 184 bytes of payload and 4 byte header.

The 4 byte header includes a packet identifier (PID), which uniquely identifies the stream to which the packet belongs and allows a receiver to respectively differentiate the TS packets. Each packet is associated with a PES through the setting of a PID value in the packet header. Some PID values are predefined and are used to indicate various streams of control information. A packet with an unknown PID is silently disregarded by a receiver. A particular PID value of 0x1 FFF is reserved to indicate that the packet is a null packet and to be ignored by the receiver. Such null packets are inserted to retain the specified TS bit rate.

Audio and video data can be transmitted to a reproduction device over a communication network in form of a MPEG TS. The MPEG TS includes audio packets and video packets differentiated by different PID values. Usually, there are more video than audio packets to be transmitted.

A reproduction device includes a display for displaying the video signal and has loudspeakers associated thereto for reproducing the audio signal. For transmission to the reproduction devices, the television signal is encoded in accordance with one of the digital encoding standards, in particular in MPEG TS form and transmitted towards the reproduction devices (also called "head units"). Each reproduction device is provided with a decoding unit which decodes the received encoded audio and/or video signals into analogue signals for reproduction on the display screen or the loudspeakers.

During travel of the vehicle, the signal strength of the received television signal varies and tends to undergo fading. Such variations in signal strength may cause distortions in the reproduced image on the display device and also in the audio signal. For effectively suppressing a disturbance in the recovered images and audio data, the television receiver has to continuously search for and switch to a television signal having a better signal strength.

The occurrence of fading and a switching between different radio stations continuously interrupts the received television signal and causes distortions in the reproduced audio and video signal. Depending on the length of each of the distortions, the digital encoding procedure and the transmission of data to the reproduction device is interrupted. Such interruptions cause the encoder to stop the encoding operation. As a result, the sequence of encoded video frames and audio data received at the reproduction device is abruptly stopped and a time consuming initialization procedure is required in the decoder of the reproduction device when the signal distortion is terminated and the transmission of encoded video and/or data is resumed. Thus, the quality of the reproduced television signal is longer affected as the actual period of the distortion is extended due to a required resynchronization procedure at the display device.

The length of the interruption of the video signal display on the display device is prolonged by all steps needed to restart the decoding and reproduction procedure. For instance, each decoding unit is provided with a buffer to prevent a data underflow or overflow of the received audio and/or video data. The video buffer is operated such that the video data level is maintained around a predefined buffer level value. Consequently, a decoding and reproduction of new video information at the reproduction device cannot be started until the buffer has been filled again up to the predefined buffer level. Hence, the disturbance period on the display is affected accordingly.

A conventional approach for reducing the impact of signal distortions on the perceived image quality is a provision of error concealment measures on the display side, i.e. within the reproduction device. The time period, when the reproduction device does not receive any new encoded video information, is bridged by applying predetermined video information to the display screen within the display device. This is accomplished by an additional memory provided in the display device storing video information in advance for reproduction on the display screen. Such video information being, for instance, a screen of a uniform color or a uniform background having a text like "no signal" inserted therein.

Another conventional approach for masking the video signal interruption at the display device is a freezing of the last completely received and encoded video frame and repetitively reproducing same until new video data is received at the display device.

In view of this prior art it is the object of the present invention to provide a method for reproducing a television signal and a television receiver which provide an improved quality of the reproduced signal.

This is achieved by the teaching as set forth in the independent claims.

According to a first aspect of the present invention, a method for reproducing a television signal on a reproducing device is provided. The method comprises the steps of receiving a television signal including audio and/or video data, transmitting the audio and/or video data of said received television signal in encoded form over a communication link to said display device, decoding the encoded audio and/or video data at said reproduction device, and reproducing the decoded audio and/or video data by said display device. Further, the method comprises the steps of storing predetermined audio and/or video data in a memory, monitoring the received television signal for signal distortions, and upon detecting a distortion in said received television signal inserting said stored audio and/or video data from said memory into the encoded audio and/or video data to be transmitted.

According to a further aspect, the present invention provides a television receiver for receiving a television signal and for supplying audio and/or video data of said received television signal over a communication link to a display device. Said television receiver comprises an encoding unit for encoding the audio and/or video data of said received television signal for transmission to said reproduction device. Said television receiver further comprises a memory for storing predetermined audio and/or video data, a detection unit for detecting a distortion in the received television signal and insertion means. Said insertion means insert said stored audio and/or video data into said audio and/or video data to be transmitted upon detection of a signal distortion by the detection unit.

It is the particular approach of the present invention that the hardware effort for handling distortions in a received television signal is shifted from the reproduction device to the television receiver in a distributed system which comprises a receiver and a reproduction unit (in particular the display) at a location distant from each other. While conventionally the operations for transmitting the video information to the reproduction device, namely the encoding, transmission and decoding processing, abruptly break down if a distortion occurs in the received television signal, the present invention maintains a continuous stream of encoded data which is transmitted to the reproduction device. Consequently, the effect of such signal distortions to the viewer is minimised. In particular, neither a re-synchronization of the communication link nor a re-initialization of the decoding unit at the display is required when the transmission of new audio and/or video information to the display is resumed. The impact of distortions in the received television signal on the perceived image/audio quality is thus reduced to a minimum.

As the present invention enables error concealment by employing a single hardware for a plurality of displays, the hardware effort and the processing capacity conventionally provided at display devices can be reduced. Thus, the present invention enables an improved image/audio quality by employing less expensive reproduction devices, in particular head units.

The present invention is preferably employed in mobile television receivers. During travel, the received television signal is subjected to fading and a frequent switch between different broadcast channels. By employing the present invention in vehicles, coaches and trains, high image quality is achievable notwithstanding a continuous occurrence of poor receiving conditions.

Although the present invention is preferably used for receiving a terrestrially broadcast television signal, it can also be employed for receiving television signals broadcast via satellite or received from a data storage device such as a DVD player. All television signal transmission paths are error prone and the effect of errors to the perceived image and audio quality can be reduced by employing the present invention.

Preferably, the video frames of said received television signals are encoded in accordance with one of the well-known international video coding standards such as the family of MPEG coding standards. Video signals encoded by employing one of these digital coding standards can be transmitted in a simple manner together with digitally encoded audio signals over a communication link. The use of such standards ensures interoperability with existing reproduction devices (in particular those not being equipped with any error concealment technology). Even existing vehicles can benefit from the image and audio quality improvement when a vehicle, coach or train is equipped with a television receiver in accordance with the present invention.

Preferably, the received television signal is in accordance with one of the analogue television standards PAL, SECAM, NTSC.

The present invention is employable with the same effect to forthcoming digital transmission standards, for instance, the DVB (Digital Video Broadcasting) digital television standard.

According to a preferred embodiment, the present invention inserts pre-stored audio and/or video data as soon as a continuous transmission of encoded data to the reproduction device cannot be guaranteed, i.e. the continuous encoding procedure is interrupted.

For video distortions, a pre-stored encoded frame is inserted into the stream of data transmitted to the reproduction device. In case the television signal distortion continues for a longer period of time, the stored video frame is repetitively inserted in order to maintain a continuous transmission process of encoded video frames to the display device. As soon as a television signal of sufficient signal strength is received, the repetitive insertion is stopped and a normal encoding and transmission procedure is resumed.

In order to cope with longer television signal distortions, a sequence of video frames is stored in advance in the television receiver's memory.

Preferably, the video data and audio data is transmitted in a common data stream, preferably, a MPEG TS. Accordingly, audio and video data are provided to the reproduction device in a simple manner.

Preferably, the data obtained from the memory and transmitted to the reproduction device depends on the kind of distortion detected. In particular, only the stored audio data is inserted into the data stream to the reproduction device if a distortion in the received audio signal is detected. In a corresponding manner, the stored video data is only inserted into the data stream to the reproduction device if a distortion in the video data is detected. In this manner, the error concealment in the television receiver is appropriately adapted to the kind of distortion present.

Preferably, the video data is stored in MPEG TS packet form. Accordingly, the computation effort required upon detection of a distortion is minimized as only the synchronization information needs to be adapted when inserting the packets to the transmission stream.

In accordance with the further preferred embodiment, the audio data is also stored in MPEG TS encoded form and inserted into the TS upon detection of a distortion. According to an alternative embodiment, the audio data is real-time encoded into the MPEG TS format upon detection of a distortion. In this manner, the length of the audio data to be inserted can be set independent from the length of the inserted video data.

Preferably, the insertion of video data inserted into the sequence of transmitted data to the display device is set depending on the length of the distortion. Only rather short distortions initiate the insertion of dummy data, distortions of a medium duration initiate the insertion of a stored video frame, while longer lasting distortions result in the insertion of a sequence of video frames. In this manner, the error concealment process is adaptively set depending on the severeness of the distortion.

In a corresponding manner, the insertion of audio data may be set adaptively based on the length of the detected distortion. While only short interruptions cause an insertion of dummy data, longer distortions cause the insertion of a pre-stored new sequence or even a repetitive insertion thereof.

Further embodiments of the present invention are the subject matter of dependent claims.

Additional features and advantages of the present invention will become apparent from the following and more particular description as illustrated in the accompanying drawings, wherein:
- Fig. 1: represents a schematic configuration of installation points of vehicle entertainment equipment,
- Fig. 2: illustrates schematically in block diagram form the hardware configuration of vehicle entertainment equipment,
- Fig. 3: schematically illustrates a configuration of a television receiver in accordance with the present invention, and
- Fig. 4: illustrates a more detailed example of a television receiver in accordance with the present invention.

Illustrative embodiments of the present invention will now be described with reference to the drawings.

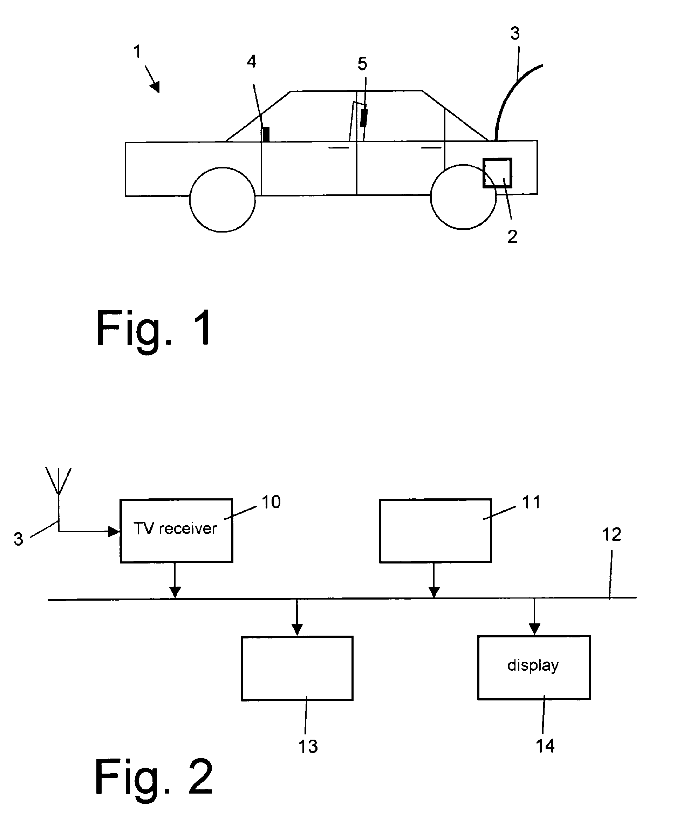

The present invention is intended for use in mobile vehicles. As shown in Fig 1, the different components of a mobile entertainment system, particularly of a mobile television system, are distributed over distant locations within the vehicle. While the processing hardware is preferably mounted at the rear side of the vehicle, in proximity to an antenna 3, display devices 4, 5 for the reproduction of video data are mounted on the vehicle's dashboard and in or between the front seats for the rear-seat passengers. The video signals to be displayed have to be transmitted from the television receiver to the plurality of display devices 4,5 at locations distant therefrom. This problem particularly arises in coaches and trains where a single processing hardware provides a video signal to a plurality of display devices at the individual passenger seats. The video signal transmission together with associated audio is accomplished by employing a communication link connecting the display devices 4, 5 to said processing unit.

The display devices or reproduction devices serve as "head units" and provide the additionally transmitted audio data to loud speakers which are arranged in proximity of the display screen. Alternatively, the loud speakers may also be arranged distant from the display screen.

A general configuration of a car entertainment and information system is shown in Fig. 2. All components 10, 11, 13 and 14 of the car entertainment and information system are connected to a communication link 12. In particular, a television receiver 10 transmits video data and audio data over the communication link 12 to a reproduction device 14 including a display for reproduction of the video data thereon. The audio data is reproduced by loud speakers associated thereto.

The communication link 12 being preferably a vehicle communication network for connecting a plurality of entertainment and information units 10, 11, 13, 14 provided in a vehicle. A vehicle communication network already available in a plurality of vehicles is the MOST bus. Preferably, the television receivers 10, reproduction device 14 and other information and entertainment units 11, 13 are connected to the MOST bus 12.

The video data are transmitted from said television receiver 10 towards said reproduction device 14 in encoded form. Preferably, the video data are encoded in accordance with one of the internationally standardized video coding standards. Such video coding standards have been standardised by two international organisations, namely the International Telecommunication Union (ITU-T) and the International Standardization Organisation/International Electro-technical Convention (ISO/ICE). The ITU-T Coding Standards are called recommendations and are denoted with H.26x, while the ISO/IEC Standards are denoted with MPEG-x. The MPEG-x and H.26x video coding families comprise the well-known video coding standards H.261, H.262, H.263, H.264, MPEG-1, MPEG-2, MPEG-4 and MPEG.7. These video coding standards have been developed for real time video communication applications and address the needs of video storage, broadcast and video streaming applications. The transmission of video data from a television receiver 10 to a reproduction device 14 is not limited to the above mentioned video coding standards but any other video coding standards can be used to the same effect.

The audio data is also transmitted from the television receiver 10 towards the display device in encoded form. For this purpose, the audio data is multiplexed into the transmitted data stream in accordance with the MPEG-2 standard. At the reproduction device side, the audio and video data is de-multiplexed and separated for individual reproduction on the respective reproduction means, i.e. a display screen and loud speakers.

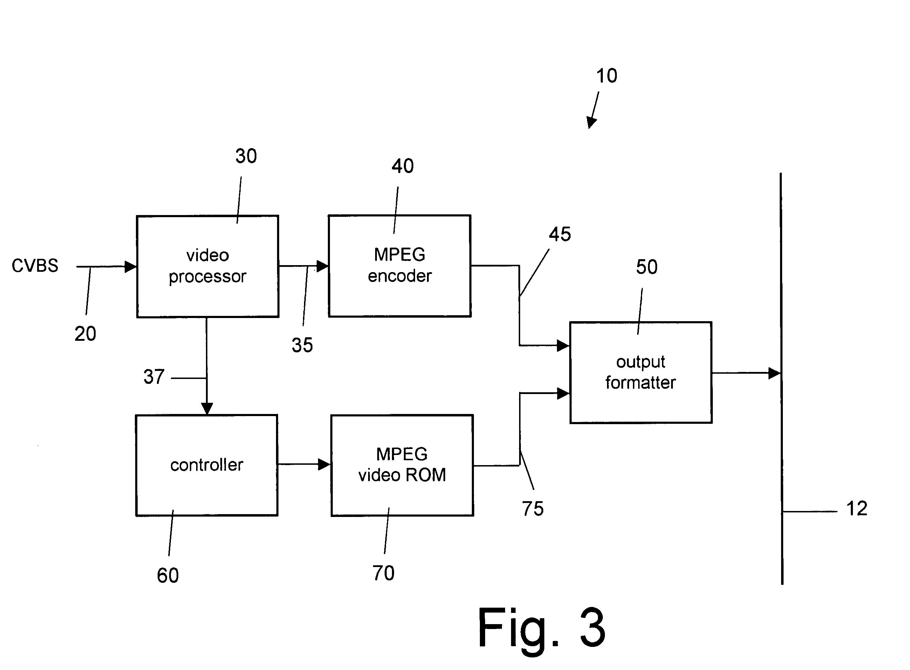

A configuration of a television receiver 10 in accordance with the present invention is illustrated in Fig. 3. A television signal which has been broadcast by a radio station in any of the transmission standards PAL, SECAM, NTSC is received by the vehicle's antenna 3 and demodulated into a composite video signal (CVBS) 20. The composite video signal 20 is applied to a video processor 30 which supplies the sequence of video frames 35 of the television signal to an encoding unit 40. It is to be noted that the expression "frame" and "video frame" in the context of the present description is not limited to only a progressive video data format but also includes "fields" of an interlaced video data format. The encoding unit 40 subjects the sequence of video frames 35 to image encoding and outputs a stream of compressed video data 45. An output formatter 50 inserts the stream of encoded video data 45 to said communication link 12. Specifically, output formatter 50 receives the encoded video data 45 in parallel form and outputs same after parallel-serial conversion to the communication link 12.

Although the present invention has been described above mainly in connection with analog transmission standards, the present invention is not limited thereto. A skilled person is aware, that digital television will also be transmitted in digital form. In particular, the DVB and DAB standards have been internationally agreed upon and will be used for future transmission.

The video processor 30 additionally monitors the received television signal (preferably the composite video signal 20 demodulated therefrom) for detecting the occurrence of signal distortions. If a signal distortion is detected which adversely effects a continuous and synchronized transmission of encoded video data 45 from the encoding unit 40, video processor 30 initiates an insertion of pre-stored compressed video data 75 into the still existing stream of encoded video data 45. The inserted video data 75 replace that video information missing due to the occurrence of a signal distortion.

The insertion procedure is started upon the issue of an insertion command 37 from said video processor 30 to a memory controller 60. Controller 60 causes said pre-stored video data to be read out and inserted into the stream of video data transmitted to display device 14.

The video data inserted in case of a television signal distortion are stored in advance in a memory 70 of said television receiver 10. The memory 70 being preferably a non-volatile memory for storing predefined video data in compressed form. Memory 70 may be implemented either in form of a ROM memory or in form of a RAM memory. While the use of a ROM memory only allows to store predefined video data once, the use of re-writable memory enables an exchange of the stored video information to be inserted into the transmitted video data and displayed in case of signal distortions.

Preferably, a flash type memory is used to implement the memory 70. A flash memory is a type of a constantly-powered non-volatile memory that can be erased and reprogrammed in memory units of blocks. A flash memory is a variation of an electrically erasable programmable read-only-memory (EEPROM). As flash memories can be re-written in block sizes, it facilitates an update of the pre-stored video and audio information.

The video information stored in advance in memory 70 may represent different kinds of "distortion" screens. For instance, a blank screen of uniform colour or a screen having additional text overlaid thereon, such like "no signal", is shown in case of a television signal interruption. The frame (or sequence of frames) stored in memory 70 can be permanently written into the memory during manufacturing of the television receiver. Alternatively, the pre-stored video data of memory 70 are written into the memory from an additionally provided non-volatile memory at predetermined points of time, for instance during start of the vehicle engine or when the television receiver is turned on. The pre-stored video data in memory 70 may also replaced during maintenance of the vehicle by authorized service personnel or by the driver himself.

The video data provided in memory 70 for insertion in case of failure to receive a television signal of sufficient signal strength are stored in compressed form. The selected compression format corresponds to that employed by encoding unit 40. If a television signal distortion is detected, controller 60 causes the pre-stored video information to be read out from memory 70 and to be inserted to the communication link 12 via output formatter 50.

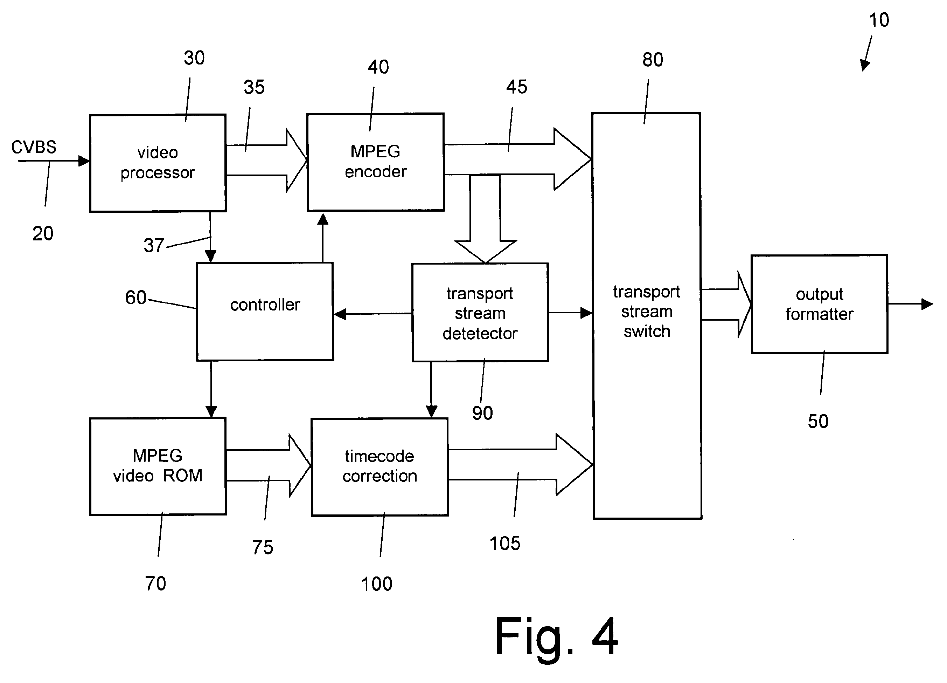

A more detailed configuration of the television receiver 10 in accordance with the present invention is illustrated in Fig. 4. The same reference numerals therein indicate corresponding functional blocks. Fig. 4 particularly illustrates additional details for inserting the compressed video data from memory 70 to the communication link 12.

An appropriate synchronization of the insertion of video data 75 from memory 70 into the transmitted sequence of encoded video data 45 is accomplished by a means of a transport stream switch 80, a transport stream detector 90 and a time correction unit 100. The transport stream detector 90 delivers information on the current status of the transport stream 45 which is provided to the control unit 60, the transport stream 80 and the time correction unit 100. Controller 60 initiates the insertion of the pre-stored video data 75 upon receiving a distortion detection signal 37 from video processor 30. In accordance therewith, the encoding procedure of encoder 40 is stopped and a read out of the pre-stored video data 75 is initiated. The read out video data 75 are subjected to a time code correction in order to synchronize the new video data 75 to the previously encoded and transmitted video data 45 in temporal respect. After completion of the time correction operation, the synchronized video information 105 is applied to the transport stream switch 80. Transport stream switch 80 switches between the currently encoded video signal 45 and the pre-stored encoded video data 105 for insertion on the communication link 12.

The video data is preferably stored in form of TS packets. Upon inserting the stored data into the transport stream, the packets are re-stamped in order to adapt the synchronization information to the transport stream in order to retain the specified TS bit rate.

The insertion is initiated upon detection upon a distortion of in television signal. This may be done based on the signal strength, the demodulator result or the MPEG decoding result if the television signal is transmitted in MPEG encoded form.

Preferably, the length of the detected distortion is employed in order to control the kind of error concealment. If a distortion of a short length is detected, preferably only MPEG TS null packets are inserted into the transport stream. A short duration comprises only few TS packets. As soon as a distortion of longer length is detected, a mute frame is inserted. Such frame data is obtained from the memory and may represent a blue screen or black screen. Preferably, a distortion of such a length only lasts for one or small number of frames. Upon detecting longer distortions, a pre-stored video sequence/music piece is inserted.

Although the preferred embodiments have been mainly described based on the handling of video data and the concealment of distortions of the video signal portion of a television signal, the handling of audio signal distortions is performed in a corresponding manner. A detailed description is therefore omitted.

Summarizing, the present invention relates to the reproduction of a television signal on a distant reproduction device. The received television signal is encoded and transmitted in a digital data format over a communication link to the reproduction device. The reproduction device decodes the received video information for display on a display screen. The present invention is particularly intended for use in mobile vehicles, coaches and trains, where the signal strength of a received television signal during travel is continuously varying and signal distortions occur frequently. In order to reduce the effect of signal distortions on the perceived image and audio quality, the present invention inserts a compressed pre-stored video or audio data into the data stream transmitted from the television receiver to the reproduction device upon detection of a television signal distortion. Thus, the decoding procedure at the display device can be maintained in spite of a received a television signal of insufficient signal strength.

## Claims

1. A method for reproducing a television signal on a reproduction device (14), comprising the steps of:
receiving a television signal including a plurality of audio and/or video data,
transmitting the audio and/or video data of said received television signal in encoded form over a communication link (12) to said reproduction device (14),
decoding said encoded audio and/or video data at said reproduction device (14), and
reproducing said decoded audio and/or video data by said reproduction device (14)
**characterized by** the steps of
storing predetermined audio and/or video data in a memory (70),
monitoring the received television signal for signal distortions, and
upon detecting a distortion in said received television signal inserting said stored audio and/or video data from said memory (70) into the encoded audio and/or video data to be transmitted.

2. A method according to claim 1, wherein said received audio and/or video data being broadcast and received by a mobile television receiver (10).

3. A method according to claim 1 or 2, wherein said received television signal being broadcast terrestrially or via satellite or received from a data storage device.

4. A method according to any of claims 1 to 3, wherein said predetermined audio and/or video data being stored in memory (70) in compressed form.

5. A method according to any of claims 1 to 4, wherein said received and said stored video data being encoded in accordance with one of the MPEG-x or H.26x video coding standards.

6. A method according to any of claims 1 to 5, wherein said predetermined audio data are stored in MPEG encoded form.

7. A method according to any of claims 1 to 6, wherein said memory (70) being a flash memory.

8. A method according to any of claims 1 to 7, wherein said stored audio data being only transmitted to said reproduction device upon detecting a distortion in the audio data included in said received television signal.

9. A method according to any of claims 1 to 8, wherein said stored video data being only transmitted to said reproduction device upon detecting a distortion in the video data included in said received television signal.

10. A method according to any of claims 1 to 9, wherein said predetermined audio data represent silence or a piece of music.

11. A method according to any of claims 1 to 10, wherein said stored audio data and said stored video data represent a corresponding reproduction time period.

12. A method according to any of claims 1 to 10, wherein the reproduction time period of said stored audio data being longer than the reproduction time period of said stored video data.

13. A method according to any of claims 1 to 12, wherein said predetermined video data is stored in form of MPEG TS packets and the video data and the audio data are transmitted to said reproduction device (14) in form of an MPEG TS.

14. A method according to claim 13, wherein said stored audio data is real-time encoded into MPEG TS packet form and inserted into the MPEG TS for transmission to the reproduction device (14).

15. A method according to any of claims 1 to 14, wherein synchronization information of said stored data is adapted to that of the current transmission stream data.

16. A method according to any of claims 1 to 15, wherein said inserting step selects one of dummy data, a stored video frame and a stored sequence of video frames for transmission to said reproduction device (14) depending on the length of a detected distortion.

17. A method according to claim 16, wherein said video and audio data are transmitted in form of an MPEG TS to said display unit and said dummy data are inserted in form of MPEG null packets into said MPEG TS.

18. A method according to any of claims 1 to 17, wherein said data format of said received television signal being one of the PAL, SECAM or NTSC standardized television signal formats.

19. A method according to any of claims 1 to 18, further comprising the step of repetitively inserting a stored video frame.

20. A method according to claim 19, wherein the number of repetitions depends on the length of said distorted television signal portion.

21. A method according to any of claims 1 to 20, wherein said memory (70) storing a predetermined sequence of video frames.

22. A method according to any of claims 1 to 21, wherein said reproduction device (14) including a display and loudspeakers.

23. A television receiver for receiving a television signal and for supplying audio and/or video data of said received television signal over a communication link (12) to a reproduction device (14), comprising:
an encoding unit (40) for encoding said audio and/or video data of said received television signal for transmission to said display device (14)
**characterized by**
a memory (70) for storing predetermined audio and/or video data,
a detection unit (60) for detection of a distortion in the received television signal, and
an insertion unit (80) for inserting said stored audio and/or video data into said encoded audio and/or video data upon detection of a signal distortion by said detection unit (60).

24. A television receiver according to claim 23, wherein said television receiver being a mobile television receiver.

25. A television receiver according to claim 23 or 24, wherein said television receiver being adapted for receiving television signals broadcast terrestrially or via satellite or being received from a data storage device.

26. A television receiver according to any of claims 23 to 25, wherein said predetermined audio and/or video data being stored in memory (70) in compressed form.

27. A television receiver according to any of claims 23 to 26, wherein said received and said stored video data are encoded in accordance with one of the MPEG-x or H.26x video coding standards.

28. A television receiver according to any of claims 23 to 27 wherein said predetermined audio data are stored in MPEG encoded form.

29. A television receiver according to any of claims 23 to 28, wherein said memory (70) being a flash memory.

30. A television receiver according to claim 23 or 29, wherein said stored audio data being only transmitted to said reproduction device (14) if a distortion has been detected in the audio data included in said received television signal.

31. A television receiver according to claim 23 or 30, wherein said stored video data being only transmitted to said reproduction device (14) if a distortion has been detected in the video data included in said received television signal.

32. A television receiver according to any of claims 23 to 31, wherein said predetermined audio data represent silence or a piece of music.

33. A television receiver according to any of claims 23 to 32, wherein said stored audio data and said stored video data represent a corresponding reproduction time period.

34. A television receiver according to any of claims 23 to 32, wherein the reproduction time period of said stored audio data being longer than the reproduction time period of said stored video data.

35. A television receiver according to any of claims 23 to 34, wherein said predetermined video data is stored in form of MPEG TS packets and the video data and the audio data are transmitted to said reproduction device (14) in form of an MPEG TS.

36. A television receiver according to claim 35, wherein said encoding unit real-time encoding said stored audio data into MPEG TS packet form and inserting encoded audio data into the MPEG TS for transmission to the reproduction device (14).

37. A television receiver according to any of claims 23 to 36, wherein said insertion unit adapting the synchronization information of said stored data to that of the current transmission stream data.

38. A television receiver according to any of claims 23 to 37, wherein said insertion unit selecting one of dummy data, a stored video frame and a stored sequence of video frames for transmission to said reproduction device (14) depending on the length of a detected distortion.

39. A television receiver according to claim 38, wherein said video and audio data are transmitted in form of an MPEG TS to said display unit and said dummy data are inserted in form of MPEG null packets into said MPEG TS.

40. A television receiver according to any of claims 23 to 39, wherein said data format of said received television signal being one of the PAL, SECAM or NTSC standardized television signal formats.

41. A television receiver according to any of claims 23 to 40, wherein said insertion unit (80) repetitively inserting a stored video frame from said memory (70) for display by said reproduction device (14).

42. A television receiver according to claim 41, wherein the number of repetitions is set depending on the length of said distorted television signal portion as detected by said detection unit (60).

43. A television receiver according to any of claims 23 to 42, wherein said memory (70) storing a predetermined sequence of video frames.

44. A car information and entertainment system comprising a television receiver (10) in accordance with any of claims 23 to 43.

45. A car information and entertainment system in accordance with claim 44, wherein said reproduction device (14) comprising a display and a loudspeaker.

46. A car information and entertainment system according to claim 45, further comprising a communication link (12) being connected to said television receiver (10) and to at least one reproduction device (14) for applying said sequence of video frames to said display device (14), wherein said communication link (12) being in accordance with the MOST bus standard.
